# EUROPEAN PATENT APPLICATION

(11) **EP 4 273 111 A1**
(43) Date of publication of application: **08.11.2023**
(21) Application number: 23171402.3
(22) Date of filing: 03.05.2023
(51) Int. Cl.: C04B 28/02, C04B 28/10, C04B 28/12, E04C 2/02, E04C 2/38, C04B 18/24

(54) **MANUFACTURING METHOD OF A CONSTRUCTION PANEL**

(30) Priority: 04.05.2022 IT 202200009083
(71) Applicant: Specialized Polymers Industry S.r.l., 38068 Rovereto (TN) (IT); Covi Costruzioni S.r.l., 38012 Predaia (TN) (IT)
(72) Inventor: Bortolotti, Walter, 38060 Villa Lagarina (TN) (IT)
(74) Representative: Manfrin, Marta

(57) **Abstract**

The present disclosure concerns a method of producing a construction panel. The method includes the following stages:
- a step A of making a cellulosic slurry comprising wet cellulosic fibers and binding agents;
- a phase B of forming and consolidating the cellulosic slurry to obtain said construction panel;

wherein said wet cellulosic fibers are recycled cellulosic fibers containing water in an amount between 35% and 55% of their own weight,
and wherein said cellulosic slurry comprises said recycled wet cellulosic fibers in an amount between 28% and 72% by weight of said cellulosic slurry, and said binding agents, in an amount between 28% and 72% by weight of said cellulosic slurry.

## Description

The present disclosure refers in general to the field of manufacturing of construction materials. In particular, the present disclosure concerns a method for manufacturing a construction panel. More specifically, the present disclosure concerns a method for manufacturing a panel for dry construction made from recycled cellulose.

It is becoming increasingly common to construct buildings according to "dry" construction techniques, which do not or only minimally involve the use of hydraulic binders, glues or sealants to associate construction elements one another. According to such techniques, construction elements, such as panels, are associate one another mainly by means of mechanical joints, generally, of the reversible type. One of the main advantages associated with "dry" construction techniques is the possibility, in the event of maintenance, renovation or demolition of the building, of being able to easily disassemble the construction elements, and thus eventually to replace them and properly dispose of them. For this reason, dry construction techniques are increasingly being used in the field of green building. In addition, since hydraulic binders, glues or sealants require to wait for a certain drying time before being able to proceed with subsequent construction steps, the use of dry construction techniques can reduce the time for installation.

Despite, the progressive use in such a field of panels, both as structural and covering elements, these are traditionally made from raw materials or contain mostly raw materials. Typically, the raw materials used in the production of construction panels are: gypsum, cardboard, wood.

As known, the massive use of raw materials leads not only to a greater environmental impact but also results in a higher production cost.

The purpose of the present disclosure is to make available a manufacturing process of a construction panel that can overcome the above-mentioned drawbacks with reference to the prior art and/or achieve further advantages.

This is accomplished by means of a process as defined in independent claim 1, a construction panel or a construction module as defined in independent claims 11 and 12, respectively. Secondary features and particular embodiments of the subject matter of the present disclosure are defined in the corresponding dependent claims. At the basis of the present disclosure, there is the recognition by the author of the present disclosure that some secondary raw materials, i.e. waste from production processes, scraps, by-products of production processes, or recycled raw materials, can be used in the production of construction panels. In particular, the author of the present disclosure has found that recycled cellulosic fibers or "secondary" cellulosic fibers, i.e., coming from recycling or waste from manufacturing process, are particularly suitable for manufacturing construction panels, even more so if damp, i.e., containing water.

According to the present disclosure, the manufacturing method of a construction panel comprises the following steps:
- a step A of making a cellulosic slurry comprising moist cellulosic fibers, and binding agents;
- a step B of forming and solidifying the cellulosic slurry to obtain said construction panel;

wherein said cellulosic fibers are damp cellulosic fibers from recycling and contain water in an amount between 35% to 55% of their own weight,
and wherein said cellulosic slurry comprises said damp cellulosic fibers in an amount between 28% and 72% by weight of said cellulosic slurry, and said binding agents, in an amount between 28% and 72% by weight of said cellulosic slurry.

Following the manufacturing method according to the present disclosure, it is therefore possible to make the most of the moist cellulosic fibers from recycling, or "secondary" cellulosic fibers, by introducing them into a new manufacturing cycle instead of other raw materials. In this way it is possible to limit the massive use of other raw materials.

In fact, the manufacturing method of a construction panel according to the present disclosure provides an alternative way of using, even on a large scale, damp cellulosic fibers from recycling, or "secondary" cellulosic fibers.

In particular, the ratio between the amount by weight of the cellulosic fibers from recycling and the bonding agents for the formation of the cellulosic slurry is suitably chosen to guarantee that the panel can present a desired set of mechanical characteristics, such as for example stiffness, lightness, compressive strength, bending strength.

Further advantages, features and modes of use of the subject of the present disclosure will become clear from the following detailed description of embodiments thereof, provided by way of a non-limiting example. It is nevertheless evident that each embodiment may have one or more of the advantages listed above; in any case it is nevertheless not necessary that each embodiment should have simultaneously all the advantages listed.

The manufacturing method of a construction panel according to the present disclosure is now described. In other words, the method according to the present disclosure allows to obtain a prefabricated panel for the construction of buildings.

In the context of the present disclosure, the term "panel" means a substantially two-dimensional body, i.e. a body having one of the dimensions which is particularly small compared to the other two dimensions. The afore-mentioned manufacturing method comprises the following steps: a step A of making a cellulosic slurry and a step B of forming and solidifying the cellulosic slurry to form a construction panel. The cellulosic slurry is a paste, compound or amalgam. In fact, thanks to their water content, the free damp cellulosic fibers are capable of mixing with the binding agents.

The cellulosic slurry comprises damp cellulosic fibers from recycling and binding agents, both in an amount respectively between 28% and 72% by weight of the same slurry. In other words, the cellulosic fibers constitute 28% and 72% by weight of the cellulosic slurry and the binding agents constitute 28% and 72% by weight of the cellulosic slurry.

In the context of the present disclosure, the expression "damp" means that the cellulosic fibers contain water in an amount between 35% and 55% of their weight.

In the context of the present disclosure, the expression "from recycling" means that the cellulosic fibers are "secondary". In other words, reference is made to cellulosic fibers deriving from secondary raw materials, i.e. from the processing of production waste, by-products of production processes or products that have reached the end of their life cycle. Put it differently, the cellulosic fibers are not "virgin" but are obtained by processing a by-product or production waste deriving from a previous manufacturing process, in particular from the processing and/or manufacturing of paper, or they derive from recycled materials.

For example, moist cellulosic fibers can be extracted from paper mill sludge. In this case, the cellulosic fibers already contain the necessary moist to be mixed with the binding agents or they are dehydrated until the necessary moist is reached to be mixed with the binding agents. Alternatively, the cellulosic fibers can be obtained from paper and/or cardboard to be recycled, i.e., at the end of its life cycle, and then added or hydrated or wetted with water so as to obtain damp cellulosic fibers. Otherwise, the cellulosic fibers can be obtained from paper and/or cardboard to be recycled which is soaked until it is dissolved in water, then crushed and dehydrated to remove any excess of water.

By binding agents, it is meant substances or materials having adhesive and cohesive properties which, once kneaded, i.e. mixed or blended, with other materials initially give rise to a plastic mass, i.e. deformable and workable mass, which gradually hardens. In particular, in the present case, during step A the binding agents react with the water present in the damp cellulosic fibers to give rise to the cellulosic slurry in the form of a plastic mass apt to be shaped or modeled. In this way, in step B, the cellulosic slurry can be shaped or modeled into a panel and then compacted, i.e. solidified, to maintain the desired shape.

The percentage values indicated in the present disclosure must be intended with an error range of ±5%.

According to a preferred aspect of the present disclosure, the damp cellulosic fibers are "free" moist cellulosic fibers, i.e. damp cellulosic fibers that do not form part of a unitary structure, such as a sheet or a pellet.

In other words, the expression "free" means that the fibers are isolated, i.e. separated from each other, or form lumps or agglomerates that are not very compact and easily disintegrate during the step of making the slurry. The use of free fibers allows the binding agents to distribute themselves homogeneously within the fibrous mass.

According to a preferred aspect of the present disclosure, approximately half of the weight percent of the cellulosic slurry consists of the moist cellulosic fibers or binding agents. More preferably, the content of the moist cellulosic fibers and that of the binding agents in the cellulosic slurry is between 45% and 55% by weight of the cellulosic slurry itself. In other words, the cellulosic slurry comprises the moist cellulosic fibers in an amount between 45% and 55% of its weight and the binding agents in an amount between 45% and about 55% of its weight.

According to a preferred aspect of the present disclosure, the binding agents are atmospheric binders. Even more preferably, the binding agents are hydraulic binders, so as to react directly with the water contained in the damp cellulosic fibers. For example, such binders may be selected from one or more of the following materials: pure lime, hydraulic lime, cement, natural or artificial pozzolan and natural hydraulic binders, and/or are a mix of such materials.

According to a preferred aspect of the present disclosure, the cellulosic slurry additionally comprises an additive agent or a mix of additive agents. In particular, this additive agent or mix of additive agents is selected from: accelerators, such as for example setting accelerators or hardening accelerators, water reducers, water repellents, air-entraining agents, dyes (also in the form of oxides or natural earths). Depending on the type of additive or the mix of additive agents, it is possible to determine the mechanical and/or physico-chemical properties of the cellulosic slurry starting from step A. It follows that in this way it is possible to define the desired final performance of the construction panel.

According to a preferred aspect of the present disclosure, the additive agent or the mix of additive agents is present in the cellulosic slurry in an amount lower than 19% by weight of the latter; as the binding agent must always be superior to the additives which act properly on the binding agent itself to obtain better setting reactions both in terms of reaction time and final technical features.

According to a preferred aspect of the present disclosure, the cellulosic slurry can furthermore comprise one or more of the following materials: hemp shives, wood fibers, glass/wool fibers, rock wool, textile fibers, or fibers deriving from the processing of fabrics, raw or cooked clay, inert material of a calcareous, siliceous or dolomitic nature. These materials can be chosen according to the mechanical and/or physical characteristics that are desired for the cellulosic slurry and, consequently, for the construction panel. Therefore, depending on the choice and quantity of further components added to the cellulosic slurry, it is possible to define the desired characteristics and properties of the construction panel.

In particular, the hemp shives having a high silica content, upon contact with the binding agents, especially lime, undergoes a mineralization process which determines an increase in mechanical resistance and preserves the cellulosic slurry from deterioration once consolidated, i.e. solidified.

Wood fibers help to increase the thermal insulation capacity of a material. Therefore, if added to the cellulosic slurry, they make the latter, and consequently the construction panel, more insulating from a thermal standpoint.

Glass fibers or glass wool, rock wool can be used to increase the thermal and acoustic insulation capacity of the cellulosic slurry, therefore of the construction panel.

Textile fibers, i.e. deriving from the processing of fabrics, such as for example cotton, linen, hemp and wool fibers deriving from both the processing of fabrics and their recycling, can be used to increase the thermal and acoustic insulation capacity but also to make the cellulosic slurry, and consequently the construction panel, more hygroscopic.

Clay, raw or cooked, can be added to the cellulosic slurry to improve its sound-absorbing, heat-insulating and hygroscopic properties.

Inert material of a calcareous, siliceous or dolomitic nature, can be mixed together with the moist cellulosic fibers and binders to form a cellulosic slurry capable of improving the properties of mechanical compressive strength, resistance to surface wear, greater stability of the panel during the steps of drying and maturation reducing deformation due to hygrometric shrinkage.

According to a preferred aspect of the present disclosure, one or more of the aforesaid materials are included in the cellulosic slurry instead of the damp cellulosic fibers and/or of the binding agents in a percentage by weight not greater than 40% of the cellulosic slurry. Alternatively, one or more of the aforesaid materials are included in the cellulosic slurry in addition to the moist cellulosic fibers and/or binding agents in a weight percentage not exceeding 40% of the cellulosic slurry. In other words, collectively these materials can be used to form up to the of 40% of the weight of the cellulosic slurry.

According to a preferred aspect of the present disclosure, the step B in turn comprises a sub-step B1 and a sub-step B2.

In the context of the present disclosure, a sub-step means a portion, or stage, of a step. A step can include several sub-steps.

Sub-step B1 can be a filling sub-step to fill the cavity of a mold with the cellulosic slurry. In particular, the mold can be or comprise a formwork having a cavity suitable for receiving the cellulosic slurry to give it a shape. The cavity preferably has the shape of a parallelepiped and has the dimensions of the construction panel to be obtained.

Alternatively, step B1 can be a spreading step to spread the cellulosic slurry on a conveyor belt or conveyor carpet. In other words, the cellulosic slurry is spread or arranged, preferably in a substantially uniform manner, i.e., to form a substantially uniform layer, on a conveyor belt or carpet. In other words, the slurry is spread on the conveyor belt or transformer carpet so as to form on the latter a layer having thickness and width as uniform as possible. According to this preferred aspect, the cellulosic slurry can be fed continuously so as to form a continuous layer, i.e. without interruptions, on the conveyor belt or carpet. In other words, the length of the layer of cellulosic slurry arranged on the conveyor belt or carpet, and consequently that of the construction panel, does not need to be necessarily defined a priori. In addition, the width of the layer of cellulosic slurry, and consequently that of the construction panel, can be any as long as it is between the two opposite free edges of the conveyor belt. Therefore, with respect to the use of molds, which necessarily have predefined dimensions, this preferred aspect allows manufacturing construction panels having innumerable shapes and dimensions without the need to have as many innumerable molds, the cost and size of which can be considerable. For example, in order to manufacture a panel having a particular shape or particular dimensions, it will not be necessary to have a suitable mold and/or it will not be necessary to associate several panels together in order to obtain the desired shape and/or dimensions. The method according to the present invention thus allows to obtain an optimal compromise between production flexibility, in terms of shape/dimensions of the panels to be produced, and production costs and the space required to store the molds.

Sub-step B2 is a pressure application sub-step to apply pressure to the cellulosic slurry. In other words, during sub-step B2 the cellulosic slurry contained inside the mold cavity or arranged on the conveyor belt or conveyor carpet undergoes a compression, which causes a compacting effect of the cellulosic slurry. Compacting facilitates the solidification of the cellulosic slurry and consequently ensures that the construction panel has the mechanical characteristics, in particular of mechanical resistance, especially bending strength, necessary for its use in the construction sector.

According to a preferred aspect of the present disclosure, in sub-step B2 the pressure is applied to the cellulosic slurry by means of a press or rotating cylinders. Preferably, the pressure in sub-step B2 is applied to the cellulosic slurry contained in the mold cavity by means of a press. Otherwise, preferably, the pressure in sub-step B2 is applied by means of at least one pair of opposing cylinders, i.e. rollers, between which runs the conveyor belt or conveyor carpet on which the cellulosic slurry is spread. In this way, there is continuity and uniformity in the application of pressure to all the cellulosic slurry spread on the conveyor belt. In other words, in this way, all the cellulosic slurry present on the conveyor belt is subjected, i.e. undergoes, the same compression. It will be possible to guarantee the uniform application of the pressure on the two opposite faces of the panel, even in the manufacturing of a panel having a particular form or dimensions. This preferred characteristic of the present disclosure allows to obtain a high homogeneity of the compaction on all the material spread on the conveyor belt. In other words, it is possible to ensure that, following compaction, all the cellulosic slurry present on the conveyor belt has the same mechanical characteristics. According to a preferred aspect of the present disclosure, during sub-step B2 a pressure ranging from about 200 kg/cm² to about 600 kg/cm² is applied to the cellulosic slurry contained in the mold cavity. In other words, the compression applied to the cellulosic slurry contained in the mold cavity falls within the range between about 200 kg/cm² and about 600 kg/cm², i.e. between about 20 and 60 Mpa.

According to a preferred aspect of the present disclosure, during sub-step B2 a pressure of between about 200 kg/cm² and about 600 kg/cm² is applied to the cellulosic slurry contained in the mold cavity. In other words, the compression applied to the cellulosic slurry contained in the mold cavity falls within the range between about 200 kg/cm² and about 600 kg/cm², i.e. between about 20 and 60 Mpa.

The pressure range between 200 kg/cm² and 600 kg/cm² makes it possible to ensure that the construction panel has the mechanical strength necessary to be used in the construction of a building. A lower pressure is not sufficient to obtain a compaction of the panel such that it can withstand bending stresses typical of the application in the building sector, i.e. characteristics of resistance to bending stresses occurring during the manipulation of the slabs during assembly and subsequently to obtaining of finished structures with calculable stress stability characteristics. In particular, the application of a pressure included in the range indicated above allows to obtain a panel having an ultimate bending strength, calculated according to the UNI EN 520:2009 standard, higher than 500 N/mm² and more preferably higher than 550 N/mm².

Moreover, preferably, according to this aspect, the pressure application time is preferably variable between 0.1 seconds and 60.0 seconds. The pressure can be exerted in a constant or variable way.

Preferably, the construction panel obtained according to the method of the present disclosure has a thickness of less than 50mm, more preferably less than 20mm. Even more preferably, the construction panel obtained according to the method of the present disclosure has a thickness between 10mm and 15mm.

According to a preferred aspect of the present disclosure, the mold cavity develops mainly along a first direction and a second direction perpendicular to each other and during the sub-step B2 the pressure is applied perpendicular to the first direction and the second direction. As mentioned above, preferably, the cavity has the shape of a parallelepiped and a third dimension of the cavity is significantly smaller than the first and second directions. Pressure is then applied along the third direction. According to a preferred aspect of the present disclosure, the conveyor belt or carpet extends mainly along a first direction, between two opposite free edges, and a second direction orthogonal to the first direction and parallel to the running direction of the same conveyor belt or carpet. Preferably, the second direction is greater than the first direction. In sub-step B1 the pressure is applied perpendicular to the first direction and the second direction.

According to a preferred aspect of the present disclosure, if the cellulosic slurry during sub-step B1 is spread or arranged on a conveyor belt or carpet, step B of the method provides for a cutting sub-step B3. This step B3 takes place after sub-step B1 and sub-step B2 and involves cutting the compacted cellulosic slurry according to the desired shape and/or size in order to obtain one or more construction panels. According to a preferred aspect of the present disclosure, step B can further comprise a sub-step B4, subsequent to sub-step B1. This sub-step B4 provides for at least partially immersing one or more inserts in the cellulosic slurry contained in the mold cavity or arranged on the conveyor belt or carpet. In this way, a construction panel is obtained comprising an insert, wholly or partly incorporated in the cellulosic slurry. That is to say that the insert at the end of the production process is integral with the solidified cellulosic slurry. Preferably, the insert consists of or comprises a reinforcing mesh. This reinforcing mesh can be made for example of metal. More preferably, the reinforcing mesh is made of polymeric material, glass fibers, basalt fibers, synthetic or natural fiber fabric such as, for example, hemp or jute; these materials, in fact, have a lower cost and allow for easier application than metal. Preferably, the reinforcing mesh is incorporated in the cellulosic slurry so as to be substantially parallel to one of the largest surfaces of the construction panel. According to a preferred aspect of the present disclosure, the method can further provide for a step C of curing, i.e. drying, the construction panel. This step C follows step B. Step C of curing involves letting the construction panel to dry completely. Curing or drying can be obtained by letting the construction panel rest at room temperature for about 20-60 days. At the end of step C the construction panel is mechanically more resistant and therefore becomes easier to handle, i.e. manipulated, and therefore transportable.

Preferably, if step B involves the use of a mold, step C is conducted after removing the construction panel from the mold cavity.

According to a preferred aspect, the method further comprises a step D of shaping the perimetric edges of the construction panel. This step D is provided after step B. Specifically, step D can provide for shaping the perimetric edges of the construction panel so as to chamfer, round them and/or create ribs or hollows. For example, some construction panels may have ribs configured to perform a shape coupling, of the male and female type, with the recesses present on other construction panels. In this, assembling several mutually associated construction panels at a respective peripheral edge can be facilitated.

According to a preferred aspect, the method further comprises a step E of carrying out a surface finish. This step may include the application of a gripping agent and/or a dye in particular comprising potassium silicates and/or a primer on one or more surfaces of the construction panel. Depending on the type of substance applied, it is possible to obtain a specific aesthetic effect of the construction panel. Also in this way it is possible to facilitate the achievement of a specific aesthetic effect or any surface treatment of the construction panel during the installation of the latter. According to a preferred aspect of the present disclosure, the method also comprises a step F for checking the water content of the damp cellulosic fibers before step A of making the cellulosic slurry.

Preferably, step F provides for taking a sample of damp cellulosic fibers from those to be used in step A and measuring their weight. Then the same step involves heating the sample of damp cellulosic fibers, for example inside an oven, and measuring the weight again. The weight loss of the sample of wet cellulosic fibers, between before and after heating, substantially corresponds to the amount of water present in the sample of wet cellulosic fibers pre-heating and, consequently, substantially corresponds to the amount of water of the wet cellulosic fibers intended to be used in step A. For example, for a 100g sample of damp cellulosic fibers, step F can provide heating to a temperature between 95°C and 110°C, preferably between 100°C and 105°C and more preferably around 102°C. for about 12 hours. According to a preferred aspect of the present disclosure, the method also comprises a control step G for controlling the humidity, i.e. the amount of water, present in the cellulosic slurry. This can be useful in the event that step A is carried out well in advance of step B and there may be the probability that the cellulosic slurry, in particular the damp cellulosic fibers, has dried out. Preferably, this step G can provide for the use of electrodes; in fact, the higher the water content, the higher the thermal conductivity of the cellulosic slurry.

According to a preferred aspect of the present disclosure, the method comprises a cellulosic pulp rehydration step H for rehydrating the cellulosic slurry, in particular the damp cellulosic fibers. Step H may include spraying water on the cellulosic slurry or applying, i.e. adding, water steam to the cellulosic slurry. Preferably, step H is performed before step B.

In addition, the object of this disclosure concerns a construction panel made, i.e. obtained, through the method according to one or more of the aspects defined up to now.

Preferably, the construction panel obtained according to the method of the present disclosure has a thickness of less than 50mm, more preferably less than 20mm. Even more preferably, the construction panel obtained according to the method of the present disclosure has a thickness between 10mm and 15mm.

Preferably, the construction panel obtained according to the method of the present disclosure has a ultimate bending strength, calculated according to the UNI EN 520:2009 standard, higher than 500 N/mm², more preferably higher than 550 N/mm².

The object of the present disclosure may also relate to a construction module comprising the aforementioned construction panel associated with a frame, i.e. a scaffolding or supporting structure. In particular, the association of the construction panel to the frame can be mechanical, for example through screws or nails, or by adhesion, for example with glues or silicone.

Finally, the present disclosure also relates to a use in a building of a construction panel, obtained according to the method illustrated here, or of a construction module comprising the aforementioned construction panel. For example, the construction panel or module can be associated with a wall structure such as a wall, a ceiling or other structural element of a building.

The object of the present disclosure has been described up to now with reference to its embodiments. It is to be understood that there may exist other embodiments which pertain to the same inventive core, all falling within the scope of protection of the claims set forth below.

## Claims

1. Method of manufacturing a construction panel, wherein the method includes the following steps:
- a step A of making a cellulosic slurry comprising damp cellulosic fibers, and binding agents;
- a step B of forming and consolidating the cellulosic slurry to obtain said construction panel;
wherein said damp cellulosic fibers are cellulosic fibers from recycling containing water in an amount between 35% and 55% of their own weight,
and wherein said cellulosic slurry comprises said damp cellulosic fibers in an amount ranging from 28% to 72% by weight of said cellulosic slurry, and said binding agents, in an amount of between 28% and 72% by weight of said cellulosic slurry.

2. Method according to claim 1, wherein said cellulosic slurry comprises said damp cellulosic fibers in an amount comprised between 45% and 55% by weight of said cellulosic slurry, and said binding agents, in an amount comprised between 45% and about 55 % by weight of said cellulosic slurry.

3. Method according to claim 1 or 2, wherein said binding agents are selected from pure lime, hydraulic lime, cement, natural or artificial pozzolan and natural hydraulic binders and/or a mix of these.

4. Method according to any one of the preceding claims, wherein said cellulosic slurry further comprises an additive agent or a mix of additive agents selected from: accelerators, water reducers, water repellents, air-entraining agents, dyes, and wherein said additive agent or said mix of additive agents is less than 19% by weight of said cellulosic slurry.

5. Method according to any one of the preceding claims, wherein said cellulosic slurry further comprises one or more of the following materials: hemp fibers, wood fibers, glass/wool fibers, rock wool, textile fibers, raw or fired clay, calcareous, siliceous or dolomitic inert material instead or in addition to said damp cellulosic fibers and/or to said binding agents in a percentage by weight not greater than 40% of said cellulosic slurry.

6. Method according to any one of the preceding claims, wherein said step B in turn comprises:
- a sub-step B1: of filling to fill the cavity of a mold with said cellulosic slurry;
- a sub-step B2: of applying pressure to apply a pressure to said cellulosic slurry.

7. Method according to claim 6, wherein in said sub-step B2 the pressure applied to the cellulosic slurry contained in the cavity of the mold is comprised between about 200 kg/cm² and about 600 kg/cm².

8. Method according to any one of the previous claims from 1 to 5, wherein said step B in turn comprises:
- a sub-step B1: of spreading for spreading said cellulosic slurry on a conveyor carpet or belt;
- a sub-step B2: of applying pressure to apply a pressure to said cellulosic slurry laid onto said conveyor carpet or belt;
and wherein the pressure applied to said cellulosic slurry is comprised between about 200 kg/cm2 and about 600 kg/cm2.

9. Method according to claim 8, wherein in said sub-step B2 the pressure is applied by means of rotating rollers.

10. Method according to one of claims from 6 to 9, wherein said step B further comprises a sub-step B3, subsequent to said sub-step B2, of curing for curing said construction panel.

11. Method according to one of claims from 6 to 10, wherein said step B further comprises a sub-phase B4, subsequent to said sub-step B1, of at least partial immersion of one or more inserts into said cellulose slurry in said cavity of the mold or at least partial immersion of one or more inserts into said cellulose slurry spread on said conveyor carpet or belt.

12. Construction panel obtained according to the method according to any one of the preceding claims.

13. Construction module comprising a panel according to claim 12 and a frame, wherein said construction panel is associated with said frame.

14. Use in a building of a construction panel according to claim 12 or a construction module according to claim 13.
